# EUROPÄISCHE PATENTSCHRIFT

(11) **EP 3 283 251 B1**
(45) Veröffentlichungstag und Bekanntmachung des Hinweises auf die Patenterteilung: **11.09.2019**
(21) Anmeldenummer: 17730671.9
(22) Anmeldetag: 14.06.2017
(51) Int. Cl.: B23K 9/32, F23D 14/50, B08B 1/00

(54) **REINIGUNGSVORRICHTUNG**
CLEANING DEVICE
DISPOSITIF DE NETTOYAGE

(30) Priorität: 15.06.2016 DE 102016007243
(43) Veröffentlichungstag der Anmeldung: 21.02.2018
(73) Patentinhaber: AUDI AG, 85045 Ingolstadt (DE)
(72) Erfinder: DENZER, Klaus, 74189 Weinsberg (DE)
(86) Internationale Anmeldenummer: PCT/EP2017/000692
(87) Internationale Veröffentlichungsnummer: WO 2017/215787

(56) Entgegenhaltungen:
- EP-B1- 0 090 233
- DE-A1- 4 207 114
- DE-U1- 29 617 810

## Beschreibung

Die Erfindung betrifft eine Reinigungsvorrichtung für eine mechanische Reinigung einer Gasdüse eines Schutzgas-Schweißbrenners nach dem Oberbegriff des Patentanspruches 1, siehe z.B. DE 296 17 810 U1.

Ein Schutzgas-Schweißbrenner für eine bekannte Vorrichtung zu dessen Reinigung (EP 0 090 233 B1) besteht aus einem beim Schweißen einen Schweißdraht führenden Kontaktrohr (oder auch Stromdüse genannt) und einer, dieses mit Abstand umgebender, rohrförmiger, ein inertes Schutzgas führender Gasdüse. Die Gasdüse weist eine sich konisch verjüngende Gasdüsenspitze auf. Zudem ist auch das Kontaktrohr endseitig als Kegelstumpf konisch verjüngt ausgebildet. Die Erfindung ist jedoch nicht auf die obige Gasdüsen-Geometrie beschränkt. Alternativ dazu ist die Erfindung auch für beliebige andere Gasdüsen-Geometrien nutzbar. Gleiches trifft auch auf die Kontaktrohr-Geometrie zu.

Eine solche Reinigungsvorrichtung kann einen gesteuert drehangetriebenen Reinigungskopf mit wenigstens einem mitdrehenden Reinigungsorgan sowie eine Zuführ- und Zentriereinrichtung für eine koaxiale Positionierung der Gasdüse bezüglich der Drehachse des Reinigungskopfes im Bereich des wenigstens einen Reinigungsorgans aufweisen. Bei einer gattungsgemäßen Reinigungsvorrichtung weist der Reinigungskopf ein radial äußeres, hohlzylindrisches Gehäuse auf, das das Reinigungsorgan sichtgeschützt umschließt. Der Reinigungskopf ist in der Axialrichtung federnd nachgiebig gelagert, und zwar zwischen einer Grundstellung (das heißt einer Nichtgebrauchslage) und einer Reinigungsstellung, in der die Gasdüse verdrehfest gegen einen Axial-Zentrieranschlag des Reinigungskopfes gedrückt ist, der der mit einer in Richtung auf die Grundstellung gerichteten Rückstellkraft belastet ist. In der Reinigungsstellung kann der Reinigungskopf unter Rotation die Gasdüse reinigen. Nach erfolgter Reinigung wird die Gasdüse (zum Beispiel robotergestützt) vom Reinigungskopf entfernt, so dass der Reinigungskopf unter Wirkung der Rückstellkraft in einem Rückstell-Hub selbsttätig von der Reinigungsstellung in die Grundstellung rückgeführt wird.

Aufgrund der oben erwähnten nachgiebigen Reinigungskopf-Lagerung wird die Gasdüse für den Reinigungsvorgang nicht gegen Block auf den Reinigungskopf aufgesetzt. Vielmehr ist durch die in der Axialrichtung nachgiebige Reinigungskopf-Lagerung der vom Reinigungskopf auf die Gasdüse ausgeübte Gegendruck voreinstellbar, wodurch bei einem unsachgemäßen Aufsetzen auf den Reinigungskopf eine unbeabsichtigte Lageänderung des Brennerhalts, der die Gasdüse trägt, verhindert ist.

Wie bereits oben erwähnt, ist in der Reinigungsvorrichtung das Reinigungsorgan sichtgeschützt, d.h. von außen für den Werker nicht einsehbar, vom hohlzylindrischen Reinigungskopf-Gehäuse umschlossen. Von daher ist eine werkerseitige Überwachung des Betriebszustandes des Reinigungsorgans nicht ohne weiteres durchführbar.

Aus der EP 0 502 134 B1 ist eine Zange zur Wartung von Schutzgasschweißgeräten bekannt, die eine Schutzgasdüse, einen Gasaustrittskanal und eine Stromdüse aufweisen. Aus der US 5 845 357 A ist eine Düsen-Reinigungsvorrichtung bekannt, bei der Schmauch- und Schweißspritzer von der Düseninnenseite der Gasdüse entfernbar sind.

Die Aufgabe der Erfindung besteht darin, eine Reinigungsvorrichtung bereitzustellen, bei der der Reinigungskopf in der Nichtgebrauchslage, das heißt in der Grundstellung, eine vordefinierte Grund-Drehposition einnimmt, in der insbesondere eine einfache Überwachung des Betriebszustandes des Reinigungsorgans ermöglicht ist.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 weist die Reinigungsvorrichtung zusätzlich eine mechanische Rückführeinheit mit einer Kulissenführung auf, mittels der der Reinigungskopf während des Rückstell-Hubes von der Reinigungsstellung in die Grundstellung in eine vordefinierte Grund-Drehposition zwangsrückführbar ist. Der Reinigungskopf kann so ausgelegt sein, dass in seiner zwangsrückgeführten Grund-Drehposition eine betriebssichere sowie einfache Überwachung des Betriebszustandes des von dem Reinigungskopf-Gehäuse umschlossenen Reinigungsorgans ermöglicht ist.

Auf diese Weise wird beim Rückstell-Hub eine definierte Grundstellungsfahrt durchgeführt, wodurch ein sicheres Abfragen der Position der Reinigungsschere überprüfbar ist. Prinzipiell ist eine Steuerung des Reinigungskopfes in die Grund-Drehposition auch mit einem Schrittmotor/Servomotor realisierbar. In diesem Fall wird jedoch eine zusätzliche Steuerung benötigt, was jedoch deutlich größere Baugrößen und somit auch deutlich höhere Kosten mit sich bringen.

Dieser Nachteil kann mittels der mechanischen Rückführeinheit in Kombination mit einem einfachen Luftmotor als Antriebsmotor überwunden werden. In einer bevorzugten Ausführungsvariante werden an dem Reinigungskopf-Gehäuse zwei gegenüberliegenden Kugellager (d.h. allgemein Kulissenelemente) angebracht, die sich bei erreichter Eindrücktiefe (Roboter drückt mit Hilfe des Schweißbrenners den Reinigungskopf nach unten in den mit reduziertem Luftdruck beaufschlagten Luftzylinder) frei unter der Rückführeinheit durchdrehen können. Nachdem der Reinigungsvorgang abgeschlossen ist (das heißt Drehbewegung ist beendet) und der Brenner vom Roboter nach oben entfernt ist, wird mittels eines Luftimpulses auf den Zylinder die gesamte Einheit (inklusive Reinigungskopf) nach oben gedrückt, wodurch eines der beiden Kugellager zwangsläufig in die Kulissenführung einfädelt und das Reinigungskopf-Gehäuse in einen der zwei möglichen Grundstellungen bringt. Hierdurch kann mittels gängiger optischer Sensoren (Infrarot, Laser, etc.) über Öffnungen im Drehkörper die Position der beiden Reinigungsscheren überprüft werden.

Da die Anordnung der Sensoren so gewählt ist, dass diese nur bei vollständig ausgeführter Grundstellungsfahrt die Scheren-Position überprüfen können, kann über die Meldung dieser Sensoren der Rückschluss gezogen werden, dass die Reinigung in der oberen Stellung, und die Scheren geschlossen sein müssen. Somit sind bei Meldung der Sensoren alle Stellungen auf "0" und kann ein neuer Reinigungszyklus gestartet werden.

Der oben beschriebene Ablauf kann jedoch nur erfolgen, wenn es möglich ist, die Gasdüse ohne Drehbewegung in die Reinigungsscheren einzufädeln, da die beiden Kugellager nach dem Hochdrücken in die Rückführeinheit nicht drehen können (Drehbewegung des Reinigungskopfes ist blockiert durch die Rückführeinheit).

Hierzu wird die Geometrie der Reinigungsschere so abgeändert, dass diese sich nun bei einfahrender Gasdüse selbst öffnet. Dies bringt den großen Vorteil mit sich, dass der Roboterprogrammierer, bei nicht rechtzeitigem Anhalten, keine Kollision zwischen dem Brenner (Kontaktrohr) und der Reinigungsschere verursachen kann. Zudem wird ein Ausfräsen der vordersten Gasdüsen-Öffnung aktiv verhindert, da nun ohne Drehbewegung eingefädelt werden kann und erst nach vollständigem Anlegen der Reinigungsschere an die Kontur die Reinigungskopf-Rotation aktiviert wird.

Diese Kombination der beiden aufgeführten Änderungen bringt eine wesentliche Vereinfachung des Programmierablaufes mit sich und ermöglicht gleichzeitig unter Weiterverwendung des bisher eingesetzten Luftmotors eine Positionsabfrage der Reinigungsscheren.

Nachfolgend werden weitere Erfindungsaspekte detailliert beschrieben: So kann in einer technischen Umsetzung die Reinigungsvorrichtung zur Überwachung des Betriebszustandes des Reinigungsorgans zumindest ein optisches Sensorelement aufweisen, mit dem ein Betriebszustand des Reinigungsorgans optisch erfassbar ist. Im Hinblick auf eine einfach aufgebaute Sensorik ist es bevorzugt, wenn das optische Sensorelement verdrehfest sowie mit Abstand radial außerhalb des im Reinigungsprozess rotierenden Reinigungskopfes angeordnet ist. Um eine Betriebszustand-Überwachung zu gewährleisten, kann das Reinigungskopf-Gehäuse zumindest eine Sensoröffnung aufweisen, durch die hindurch das optische Sensorelement den Betriebszustand des Reinigungsorgans erfassen kann. Bevorzugt ist es, wenn in der Grundstellung (das heißt in der Nichtgebrauchslage) des Reinigungskopfes sowie in der vordefinierten Grund-Drehposition die gehäuseseitige Sensoröffnung mit dem Sensorelement bevorzugt in Radialrichtung fluchtend ausgerichtet ist, um den Betriebszustand des Reinigungsorgans zu erfassen. Beispielhaft kann das Sensorelement so ausgelegt und angeordnet sein, dass bei einer Nichterfassung des Reinigungsorgans (das heißt insbesondere der später beschriebenen Reinigungsschere) eine mit dem Sensorelement signalverbundene Steuereinheit ein fehlerfreies Reinigungsorgan feststellt. Im Unterschied dazu kann bei einer optischen Erfassung einer Kontur des Reinigungsorgans (das heißt der später beschriebenen Reinigungsschere) die Steuereinheit ein Reinigungsorgan-Fehler feststellen. Für eine betriebssichere Erfassung des Betriebszustandes des Reinigungsorgans ist es bevorzugt, wenn in der Grundstellung sowie in der vordefinierten Grund-Drehposition die gehäuseseitige Sensoröffnung mit dem Sensorelement entlang einer optischen Achse ausgerichtet ist.

Die zur Zwangsrückführung des Reinigungskopfes erforderliche Kulissenführung kann in einer technischen Realisierung zumindest eine Anlaufschräge aufweisen. Diese kann während des Rückstell-Hubes des Reinigungskopfes in Gleit- oder Rollkontakt mit einem radial außen am Reinigungskopf-Gehäuse angeordneten Kulissenelement bringbar sein. Die Anlaufschräge kann in Bezug auf eine zur Rotationsachse rechtwinklige Radialebene schräggestellt sein und bis zu einer Scheitelstelle verlaufen, die mit der vordefinierten Grund-Drehposition des Reinigungskopfes über einstimmt.

Während des Rückstell-Hubes von der Reinigungsstellung zurück in die Grundstellung kann das Kulissenelement entlang der Anlaufschräge bis zu der Scheitelstelle gleiten/abrollen, und zwar unter zwangsweiser Drehbewegung des Reinigungskopfes bis in die vordefinierte Grund-Drehposition.

In einer technischen Ausführung kann die Kulissenführung zwei mit Bezug auf die Rotationsachse diametral gegenüberliegende Kulissenarme aufweisen, die jeweils mit einer Anlaufschräge ausgebildet sind. Die beiden Anlaufschrägen können zu einer gemeinsamen Scheitelstelle zusammenlaufen. Sofern sich der Reinigungskopf in seiner Grundstellung befindet, kann bevorzugt das gehäuseseitige Kulissenelement mit einer Rückstellkraft gegen die Scheitelstelle in der Kulissenführung gedrückt werden. In diesem Fall kann das gegen die Scheitelstelle der Kulissenführung gedrückte Kulissenelement von Seitenflanken der beiden Anlaufschrägen begrenzt sein, so dass in der Grundstellung eine Reinigungskopf-Rotation blockiert ist.

Im Unterschied zur Reinigungskopf-Grundstellung kann in der Reinigungsstellung des Reinigungskopfes das gehäuseseitige Kulissenelement außer Gleit-/Abrollanlage mit der Kulissenführung sein. Zur Freigabe der Reinigungskopf-Rotation kann daher der Reinigungskopf von seiner Grundstellung in seine Reinigungsstellung verstellt werden, in der der Reinigungskopf frei drehen kann.

In einer konkreten Ausführungsvariante kann das Reinigungsorgan eine Reinigungsschere mit zwei Reinigungsarmen aufweisen. Die Reinigungsarme können jeweils an ihren düsenabgewandten Endbereichen Fliehkraftgewichte aufweisen. Ohne Fliehkraftwirkung können die beiden Reinigungsarme in der Reinigungskopf-Grundstellung zusammengeklappt sein. Dagegen können die beiden Reinigungsarme unter Fliehkraftwirkung in einer Ausspreizrichtung auseinandergespreizt sein.

In der oben erwähnten Reinigungskopf-Grundstellung, das heißt im zusammengeklappten Zustand der Reinigungsarme, können diese in die Gasdüse eingefahren werden, um eine Gasdüsen-Innenfläche zu reinigen. Die Reinigungsarme können hierzu in der Reinigungskopf-Reinigungsstellung bei einer Reinigungskopf-Rotation gleitend und schabend an die Gasdüsen-Innenfläche der verdrehfest an dem Axial-Zentrieranschlag gehaltenen Gasdüse angepresst werden.

Die Reinigungsarme der Reinigungsschere können beim Aufsetzen der Gasdüse auf den Axial-Zentrieranschlag des noch in seiner Grundstellung befindlichen Reinigungskopfes (das heißt der Reinigungskopf ist drehblockiert) im zusammengeklappten Zustand in die Gasdüse eingefahren werden. Beim Einfahren in die Gasdüse ist es erforderlich, dass eine Kollision der Reinigungsarme mit dem Kontaktrohr verhindert wird.

Vor diesem Hintergrund kann zumindest einer der Reinigungsarme einen Mitnehmer aufweisen. Dieser kann beim Einfahren entlang einer radial äußeren Gasdüsen-Außenkontur abgleiten bzw. mit dieser zusammenwirken, wodurch die Reinigungsarme zwangsgeführt ohne Fliehkraftwirkung in der Aufspreizrichtung aufgespreizt werden. Durch das zumindest teilweise Aufspreizen der Reinigungsarme während der Gasdüsen-Einfahrt werden die Reinigungsarme kollisionsfrei am innerhalb der Gasdüse angeordneten Kontaktrohr vorbeigeführt.

In einer konkreten Ausführungsvariante kann der Mitnehmer radial außen vom Reinigungsarm abgabeln. In diesem Fall können der Mitnehmer und der Reinigungsarm eine Düsenwandung im Bereich der Gasdüsen-Öffnung jeweils innen- und außenseitig umgreifen.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Figur 1: die Reinigungsvorrichtung in einem Blockschaltdiagramm sowie den Reinigungskopf in einer Seitenschnittdarstellung sowie in der Grundstellung;
- Figur 2 bis 4: jeweils weitere Seitenansichten des in seiner Grundstellung befindlichen Reinigungskopfes;
- Figur 5: eine Detailansicht in Schnittdarstellung, die das Einfahren der Reinigungsarme in die Gasdüsen-Öffnung veranschaulicht;
- Figur 6: in einer Ansicht entsprechend der Figur 1 den in seiner Reinigungsstellung befindlichen Reinigungskopf;
- Figur 7: eine Ansicht, anhand der die beim Rückstell-Hub erfolgende Zwangsrückführung des Reinigungskopfes in seine vordefinierte Grund-Drehposition veranschaulicht ist; und
- Figur 8: der Reinigungskopf in seiner Grundstellung sowie nach erfolgter Zwangsrückführung in seine vordefinierte Grund-Drehposition.

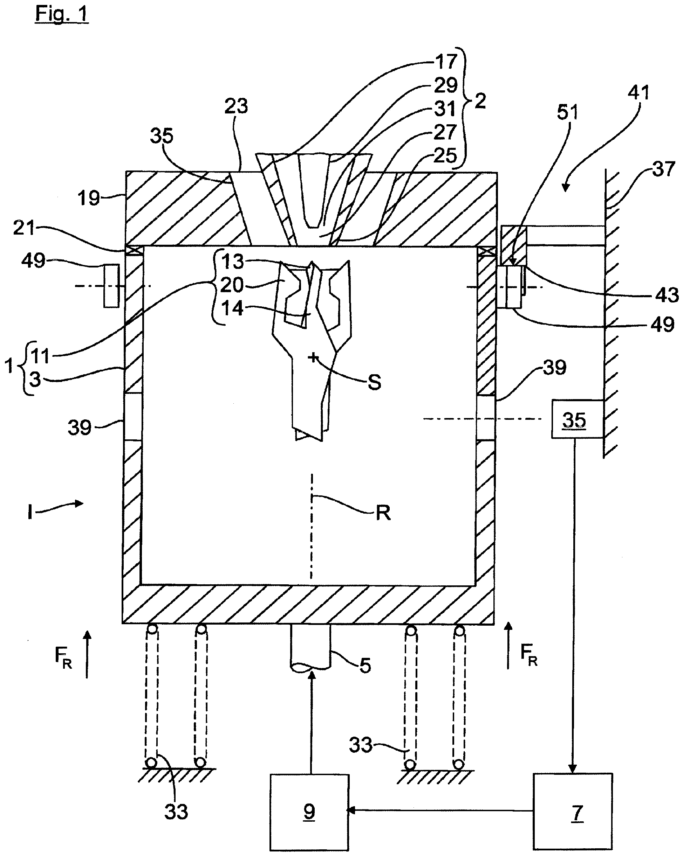

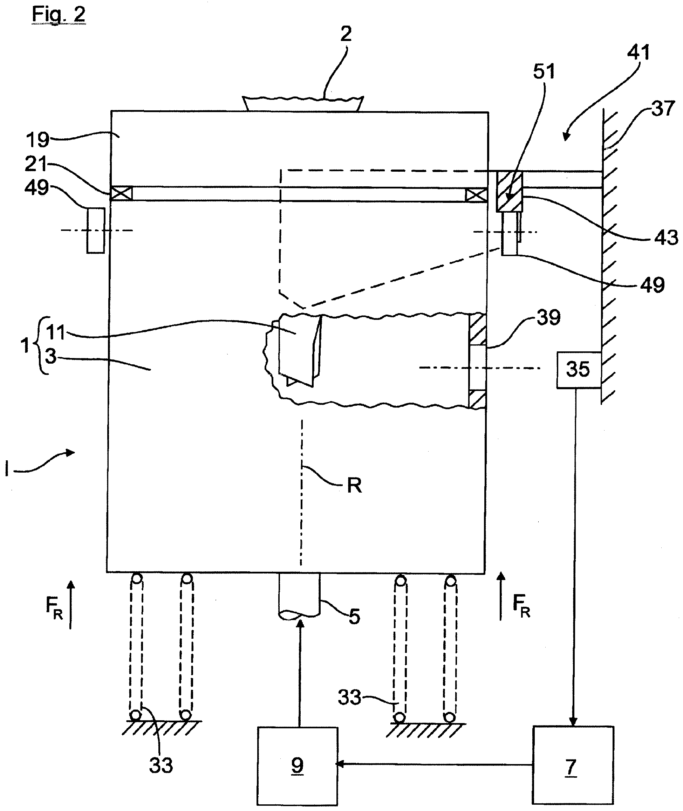

In der Figur 1 ist in einer Seitenschnittdarstellung ein Reinigungskopf 1 einer nicht näher gezeigten Reinigungsvorrichtung für eine mechanische Reinigung einer Gasdüse 2 eines Schutzgas-Schweißbrenners dargestellt. Die Figur 1 sowie die weiteren Figuren 2 bis 8 sind im Hinblick auf ein einfaches Verständnis der Erfindung angefertigt. Von daher sind die Figuren lediglich grob vereinfachte Darstellungen, die keinen realitätsgetreuen Aufbau der Reinigungsvorrichtung wiedergeben.

Der Reinigungskopf 1 weist in den Figuren ein radial äußeres Gehäuse 3 auf, das als ein zylindrischer Hohlkörper in etwa topfförmig oder käfigförmig ausgebildet ist und über eine bodenseitige zentrale Antriebswelle 5 mittels eines von einer Steuereinheit 7 ansteuerbaren Antriebsmotors 9 um eine Rotationsachse R rotierbar ist. Das hohlzylindrische Gehäuse 3 umschließt in der Figur 1 ein Reinigungsorgan 11, das in den Figuren als eine Reinigungsschere mit zwei Reinigungsarmen 13, 14 ausgeführt ist. Die beiden Reinigungsarme 13, 14 sind an einer quer zur Rotationsachse R angeordneten Scherenachse S im hohlzylindrischen Gehäuse 3 freischwingend aufgehängt. Zudem sind an den unteren Endbereichen der beiden Reinigungsarme 13, 14 jeweils nicht näher gezeigte Fliehkraftgewichte ausgebildet, so dass sich die Reinigungsarme 13, 14 bei einer Reinigungskopf-Rotation in einer Aufspreizrichtung radial nach außen aufspreizen. In den oberen Endbereichen weisen die beiden Reinigungsarme 13, 14 jeweils Schaberstrukturen auf. Mit deren Hilfe wird in einem später beschriebenen Reinigungsvorgang die Gasdüsen-Innenfläche 17 gereinigt. Das hohlzylindrische Reinigungskopf-Gehäuse 3 ist oberseitig mittels eines Zentrierhilfebauteils 19 geschlossen. Das Zentrierhilfebauteil 19 ist über Drehlager 21 randseitig auf dem hohlzylindrischen Reinigungskopf-Gehäuses 3 abgestützt.

Wie aus der Figur 1 hervorgeht, weist jeder der beiden Reinigungsarme 13, 14 jeweils einen Mitnehmer 20 auf, der bei einem nachfolgend beschriebenen Einfahren der Reinigungsarme 13, 14 in die Gasdüse 2 mit einer radial äußeren Gasdüsen-Außenkontur 25 zusammenwirkt, um die Reinigungsarme 13, 14 in der Aufspreizrichtung aufzuspreizen, so dass ein kollisionsfreies Einfahren in die Gasdüse 2 gewährleistet ist. Die beiden Mitnehmer 20 sind jeweils radial außen von den Reinigungsarmen 13, 14 abgegabelt, so dass der jeweilige Reinigungsarm 13, 14 zusammen mit seinem Mitnehmer 20 jeweils eine Düsenwandung im Bereich der Gasdüsen-Öffnung 27 innen- und außenseitig umgreift.

Das Zentrierhilfebauteil 19 weist zudem eine sich konisch nach unten verjüngende Zentrierhilfeöffnung 23 auf, in die die Gasdüse 2 mit ihrer sich konisch verjüngenden Gasdüsenspitze formschlüssig einsetzbar ist.

Wie aus der Figur 1 hervorgeht, weist die Gasdüsenspitze an ihrem vorderen offenen Endbereich die zu reinigende Gasdüsen-Innenfläche 17 sowie eine Düsen-Außenkontur 25 auf. Innerhalb der Gasdüse 2 ist zudem zentral ein bis kurz vor die Gasdüsen-Öffnung 27 reichendes Kontaktrohr 29 angeordnet, der über einen Ringspalt 31 von der Gasdüsen-Innenfläche 17 beabstandet ist.

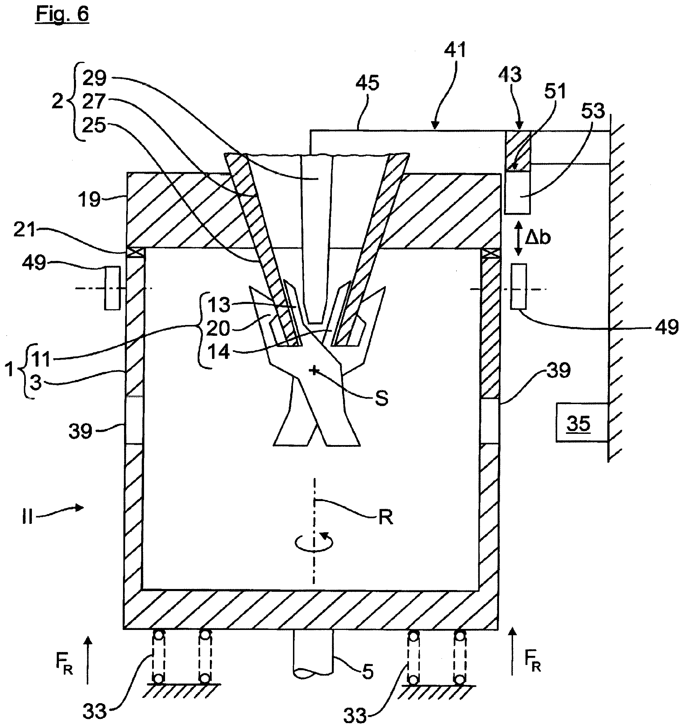

In der Figur 1 ist der Reinigungskopf 1 in der Axialrichtung nachgiebig auf Federelementen 33 gelagert, die beispielhaft als Luftzylinder realisierbar sind und die den Reinigungskopf 1 mit einer nach oben gerichteten Rückstellkraft F_{R} belasten. Auf diese Weise kann der Reinigungskopf 1 bei Überwindung der Rückstellkraft F_{R} von einer in der Figur 1 gezeigten Grundstellung I in eine Reinigungsstellung II (Figur 6) axial verstellt werden.

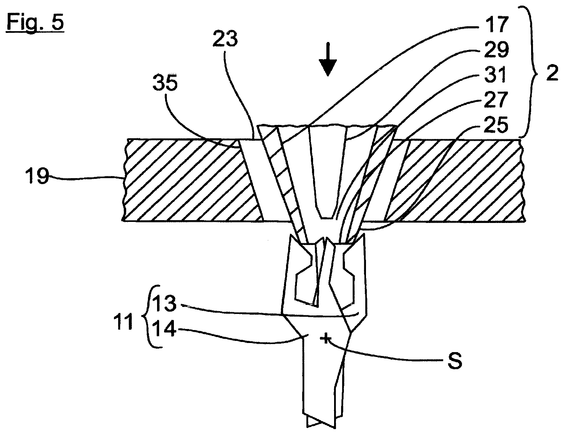

Nachfolgend wird anhand der Figuren ein Reinigungsvorgang zur Reinigung der Gasdüse 2 beschrieben: Demzufolge wird zunächst die Gasdüse 2 gemäß den Figuren 1 und 5 koaxial in die konische Zentrieröffnung 23 des Zentrierhilfebauteils 19 eingeführt. In den Figuren 1 und 5 befindet sich der Reinigungskopf 1 noch in seiner Grundstellung I. In diesem Zustand befinden sich die Reinigungsarme 13, 14 der Reinigungsschere 11 im, in der Figur 1 gezeigten zusammengeklappten (das heißt nicht aufgespreizten) Zustand. In der in der Figur 1 gezeigten Grundstellung I wird der Reinigungskopf 1 mit Hilfe einer später beschriebenen Rückführeinheit 41 selbsttätig in einer später beschriebenen vordefinierten Grund-Drehposition gehalten.

Die zusammengeklappten Reinigungsarme 13, 14 werden mit dem Einführen der Gasdüse 2 in die Zentrieröffnung 23 in die Gasdüsen-Öffnung 27 eingefahren. Beim Einfahren der Reinigungsarme 13, 14 in die Gasdüse 2 gleiten die Mitnehmer 20 der beiden Reinigungsarme 13, 14 entlang der Gasdüsen-Außenkontur 25. Dadurch werden die Reinigungsarme 13, 14 ohne Fliehkraftwirkung in der Aufspreizrichtung so aufgespreizt, dass diese sich kollisionsfrei durch den Ringspalt 31 der Gasdüse 2 bewegen, und zwar so lange, bis die Gasdüse 2 in Anschlag mit einer Mantelfläche 35 der Zentrieröffnung 23 kommt (Fig. 6) und den Reinigungskopf 1 um einen Axialversatz Δa (Fig. 6) von der Grundstellung I (Figur 1) in die Reinigungsstellung II (Figur 6) drückt. Die Axialverstellung in die Reinigungsstellung II erfolgt unter Überwindung der von den Federelementen 33 auf den Reinigungskopf 1 ausgeübten Rückstellkraft F_{R}.

Anschließend startet der Reinigungsprozess, bei dem Steuereinheit 7 den Antriebsmotor 9 ansteuert, um den Reinigungskopf 1 zu rotieren. Auf diese Weise werden die beiden Reinigungsarme 13, 14 unter Fliehkraftwirkung gleitend bzw. schabend gegen die Gasdüsen-Innenfläche 17 gepresst.

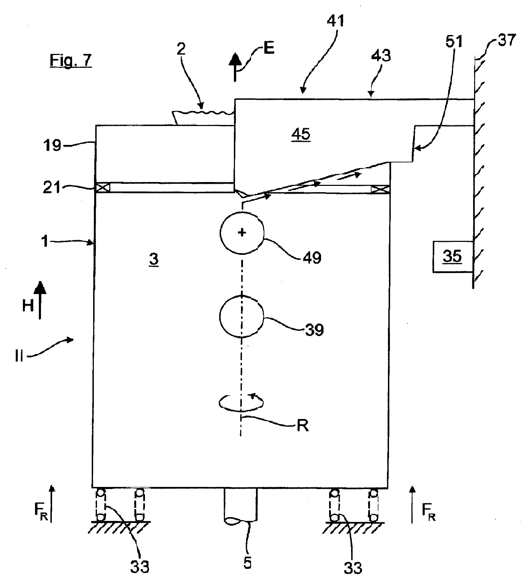

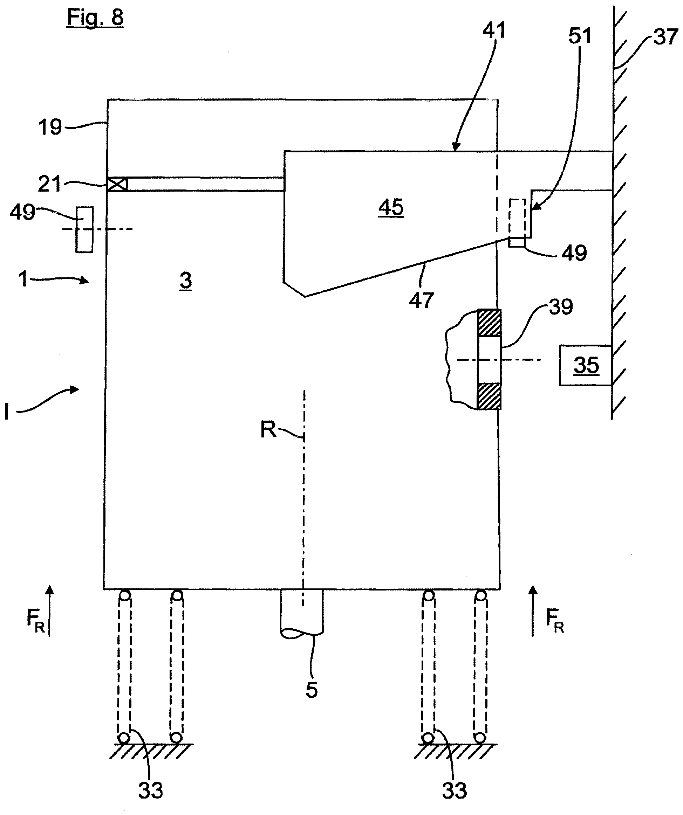

Nach dem Reinigungsprozess wird die Reinigungskopf-Rotation gestoppt und wird anschließend die Gasdüse 2 in einer Entnahmerichtung E (Figur 7) von dem Reinigungskopf 1 entfernt. Bei der Gasdüsen-Entnahme wird der Reinigungskopf 1 unter Wirkung der Rückstellkraft F_{R} in einem Rückstell-Hub H (Fig. 7) von seiner Reinigungsstellung II wieder in seine Grundstellung I (Figur 8) rückgeführt.

Wie aus den Figuren weiter hervorgeht, weist die Reinigungsvorrichtung ein optisches Sensorelement 35 auf, mit dem ein Betriebszustand der Reinigungsschere 11 erfassbar ist. Das optische Sensorelement 35 ist radial außerhalb des Reinigungskopfes 1 verdrehfest an einem Gestell 37 der Reinigungsvorrichtung befestigt. Das Reinigungskopf-Gehäuse 3 weist in der Figur 1 eine Sensoröffnung 39 auf, durch die hindurch das optische Sensorelement 35 den Betriebszustand der Reinigungsschere 11 erfassen kann. In der in der Figur 1 gezeigten vordefinierten Grund-Drehposition ist die gehäuseseitige Sensoröffnung 39 des Reinigungskopfes 1 mit dem Sensorelement 35 in der Radialrichtung fluchtend ausgerichtet, um den Betriebszustand der Reinigungsschere 11 sicher zu erfassen.

Um in der Grundstellung I des Reinigungskopfes 1 eine zuverlässige Sensor-Überwachung zu gewährleisten, weist die Reinigungsvorrichtung die mechanische Rückführeinheit 41 mit einer Kulissenführung 43 auf, mittels der der Reinigungskopf 1 während des vorgenannten Rückstell-Hubes H selbsttätig in die in der Figur 1 gezeigte vordefinierte Grund-Drehposition zwangsrückführbar ist.

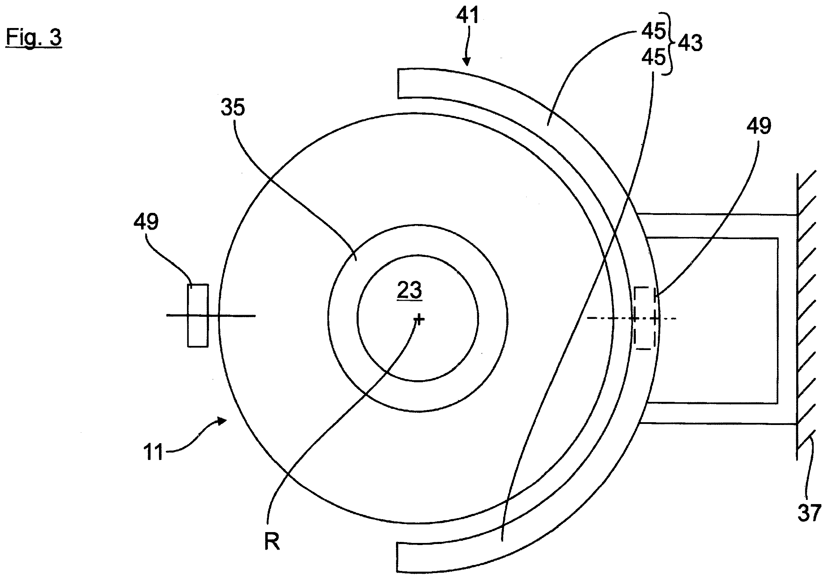

Die Kulissenführung 43 ist in der Figur 3 durch zwei mit Bezug auf die Rotationsachse R diametral gegenüberliegenden Kulissenarmen 45 aufgebaut, die den Reinigungskopf 1 mit Radialabstand in etwa zur Hälfte umfangsseitig umgreifen. Jeweils eine der Anlaufschrägen 47 der beiden Kulissenarme 45 ist mit einem der Kulissenelemente 49 in Rollkontakt bringbar, während das andere Kulissenelement 49 funktionslos, d.h. außer Anlage mit der Kulissenführung 43 ist.

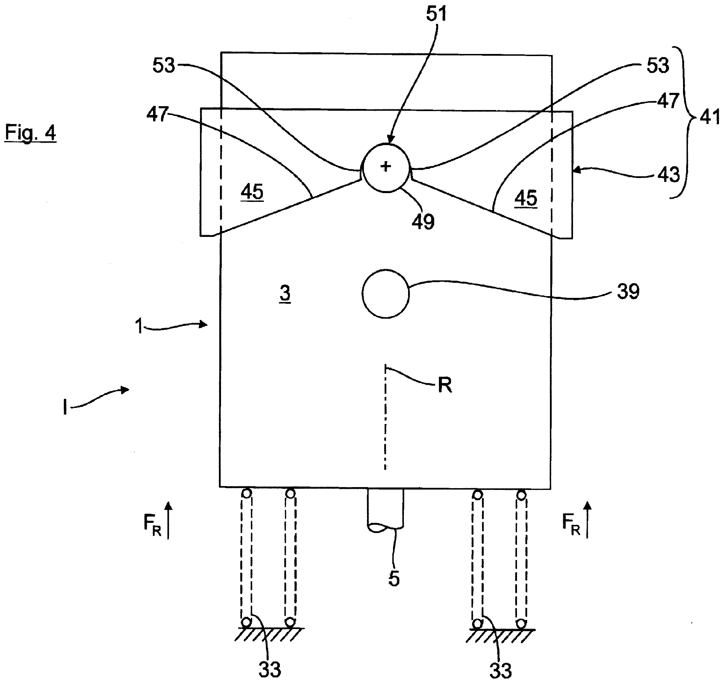

Die beiden Anlaufschrägen 47 sind mit Bezug auf eine zur Rotationsachse R rechtwinklige Radialebene schräggestellt ausgebildet. Zudem laufen die beiden Anlaufschrägen 47 an einer gemeinsamen Scheitelstelle 51 zusammen, gegen die das Kulissenelement 49 mit der von den Federelementen 33 ausgeübten Rückstellkraft F_{R} gedrückt wird. In der Figur 4 ist das gegen die Scheitelstelle 51 gedrückte Kulissenelement 49 von Seitenflanken 53 der beiden Anlaufschrägen 47 begrenzt, wodurch eine Reinigungskopf-Rotation in der Grundstellung I blockiert ist.

Demgegenüber sind in der Reinigungsstellung II die beiden Kulissenelemente 49 um einen Axialabstand Δb (Fig. 6) von der Kulissenführung 43 beabstandet. Der Axialabstand Δb ist derart bemessen, dass eine kollisionsfreie Drehung des Reinigungskopfes 1 möglich ist. Zur Freigabe der Reinigungskopf-Rotation kann also der Reinigungskopf 1 mittels der Gasdüse 2 von seiner Grundstellung I (Figur 1) in seine Reinigungsstellung II (Figur 6) verstellt werden.

Nach erfolgtem Reinigungsprozess wird die Gasdüse 2 vom Reinigungskopf 1 in der Entnahmerichtung E (Fig. 7) entfernt, wodurch sich der Reinigungskopf 1 unter Wirkung der Rückstellkraft F_{R} in einem Rückstell-Hub H (Fig. 7) wieder nach oben in seine Grundstellung I verstellt. Während des Rückstell-Hubes H wird das in der Fig. 7 gezeigte Kulissenelement 49 wieder in Rollkontakt mit der Anlaufschräge 47 der Kulissenführung 43 gebracht. Es erfolgt somit eine Zwangsführung des Kulissenelementes 49 in der in der Figur 7 gezeigten Pfeilrichtung bis zur Scheitelstelle 51, und zwar bei gleichzeitiger Drehbewegung des Reinigungskopfes 1 in die vordefinierte Grund-Drehposition.

## Patentansprüche

1. Reinigungsvorrichtung für eine mechanische Reinigung einer Gasdüse (2) eines Schutzgas-Schweißbrenners, mit einem um eine Rotationsachse (R) drehgelagerten, motorisch antreibbaren Reinigungskopf (1), der ein radial äußeres Gehäuse (3) aufweist, das ein Reinigungsorgan (11) umschließt, und der in der Axialrichtung federnd gelagert ist, und zwar zwischen einer Grundstellung (I), in der der Reinigungskopf (1) eine vordefinierte Grund-Drehposition einnimmt, und einer Reinigungsstellung (II), in der die verdrehfest angeordnete Gasdüse (2) in Druckanlage mit dem Reinigungskopf (1) ist, der mit einer in Richtung auf die Grundstellung (I) gerichteten Rückstellkraft (F_{R}) belastet ist, in welcher Reinigungsstellung (II) der Reinigungskopf (1) unter Rotation die Gasdüse (2) reinigt, wobei nach erfolgter Reinigung die Gasdüse (2) vom Reinigungskopf (1) entfernt ist und der Reinigungskopf (1) unter Wirkung der Rückstellkraft (F_{R}) in einem Rückstell-Hub (H) selbsttätig von seiner Reinigungsstellung (II) in seine Grundstellung (I) rückgeführt ist, **dadurch gekennzeichnet, dass** die Reinigungsvorrichtung eine Rückführeinheit (41) mit einer Kulissenführung (43) aufweist, mittels der der Reinigungskopf (1) während des Rückstell-Hubes (H) in einer Drehbewegung in die vordefinierte Grund-Drehposition (I) zwangsrückführbar ist.

2. Reinigungsvorrichtung nach Anspruch 1, **dadurch gekennzeichnet, dass** die Reinigungsvorrichtung zumindest ein optisches Sensorelement (35) aufweist, mit dem ein Betriebszustand des Reinigungsorgans (11) erfassbar ist, und dass insbesondere das optische Sensorelement (35) verdrehfest sowie radial außerhalb des Reinigungskopfes (1) angeordnet ist.

3. Reinigungsvorrichtung nach Anspruch 2, **dadurch gekennzeichnet, dass** das Reinigungskopf-Gehäuse (3) umfangsseitig zumindest eine Sensoröffnung (39) aufweist, durch die hindurch das optische Sensorelement (35) den Betriebszustand des Reinigungsorgans (11) erfasst, und dass insbesondere in der Grundstellung (I) und in der vordefinierten Grund-Drehposition die gehäuseseitige Sensoröffnung (39) mit dem Sensorelement (35) für eine Erfassung des Betriebszustands des Reinigungsorgans (11), insbesondere in radialer Flucht, ausgerichtet ist.

4. Reinigungsvorrichtung nach Anspruch 1, 2 oder 3, **dadurch gekennzeichnet, dass** die Kulissenführung (43) zumindest eine Anlaufschräge (47) aufweist, die während des Rückstell-Hubes (H) in Gleit- oder Rollkontakt mit einem radial außen am Reinigungskopf-Gehäuse (3) angeordneten Kulissenelement (49) bringbar ist, und dass insbesondere die Anlaufschräge (47) mit Bezug auf eine zur Rotationsachse (R) rechtwinklige Radialebene schräggestellt ist und bis zu einer, mit der vordefinierten Grund-Drehposition korrespondierenden Scheitelstelle (51) verläuft.

5. Reinigungsvorrichtung nach Anspruch 4, **dadurch gekennzeichnet, dass** während des Rückstell-Hubes (H) das Kulissenelement (49) entlang der Anlaufschräge (47) bis zur Scheitelstelle (51) der Kulissenführung (43) gleitet oder abrollt, und zwar unter zwangsweiser Drehbewegung des Reinigungskopfes (1) in die vordefinierte Grund-Drehposition.

6. Reinigungsvorrichtung nach Anspruch 4 oder 5, **dadurch gekennzeichnet, dass** die Kulissenführung (43) zwei mit Bezug auf die Rotationsachse (R) diametral gegenüberliegende Kulissenarme (45) aufweist, die jeweils mit einer Anlaufschräge (47) ausgebildet sind, und dass die beiden Anlaufschrägen (47) zu einer gemeinsamen Scheitelstelle (51) zusammenlaufen, und/oder dass in der Reinigungskopf-Grundstellung (I) das gehäuseseitige Kulissenelement (49) mit der Rückstellkraft (F_{R}) gegen die Scheitelstelle (51) gedrückt ist, und/oder dass in der Reinigungskopf-Grundstellung (I) das gegen die Scheitelstelle (51) gedrückte Kulissenelement (49) von Seitenflanken (53) der beiden Anlaufschrägen (47) begrenzt ist, so dass eine Reinigungskopf-Rotation blockiert ist.

7. Reinigungsvorrichtung nach Anspruch 6, **dadurch gekennzeichnet, dass** in der Reinigungsstellung (II) des Reinigungskopfes (1) das gehäuseseitige Kulissenelement (49) außer Eingriff mit der Kulissenführung (43) ist und der Reinigungskopf (1) für eine Düsen-Reinigung frei drehbar ist, und dass zur Freigabe der Reinigungskopf-Rotation der Reinigungskopf (1) von seiner Grundstellung (I) in seine Reinigungsstellung (II) verstellbar ist.

8. Reinigungsvorrichtung nach einem der vorhergehenden Ansprüche, **dadurch gekennzeichnet, dass** das Reinigungsorgan (11) eine Reinigungsschere mit zwei Reinigungsarmen (13, 14) ist, und dass die Reinigungsarme (13, 14) jeweils an ihren düsenabgewandten Endbereichen Fliehkraftgewichte aufweisen, und dass die Reinigungsarme (13, 14) in der Reinigungskopf-Grundstellung (I) zusammengeklappt sind und im zusammengeklappten Zustand in die Gasdüse (2) einfahrbar sind, und dass die Reinigungsarme (13, 14) in der Reinigungskopf-Reinigungsstellung (II) bei einer Reinigungskopf-Rotation gleitend und schabend an die Gasdüsen-Innenfläche (17) der verdrehfest gehaltenen Gasdüse (2) angepresst sind.

9. Reinigungsvorrichtung nach Anspruch 8, **dadurch gekennzeichnet, dass** beim Aufsetzen der Gasdüse (2) auf einen Zentrieranschlag (35) des noch in der Grundstellung (I) befindlichen Reinigungskopfes (1) die Reinigungsarme (13, 14) der Reinigungsschere (11) im zusammengeklappten Zustand in die Gasdüse (2) einfahrbar sind, und/oder dass zumindest einer der Reinigungsarme (13, 14) einen Mitnehmer (20) aufweist, der beim Einfahren mit einer radial äußeren Gasdüsen-Außenkontur (25) zusammenwirkt, um die Reinigungsarme (13, 14) ohne Fliehkraftwirkung in der Aufspreizrichtung zumindest teilweise aufzuspreizen, und zwar derart, dass ein kollisionsfreies Einfahren der Reinigungsarme (13, 14) in die Gasdüse (2) gewährleistet ist.

10. Reinigungsvorrichtung nach Anspruch 9, **dadurch gekennzeichnet, dass** der Mitnehmer (20) radial außen vom Reinigungsarm (13, 14) abgabelt, und dass der Mitnehmer (20) und der Reinigungsarme (13, 14) eine Düsenwandung im Bereich der Gasdüsen-Öffnung (27) jeweils innen- und außenseitig umgreifen.

## Claims

1. Cleaning device for mechanically cleaning a gas nozzle (2) of an inert-gas welding torch, having a motor-drivable cleaning head (1) which is mounted so as to rotate about an axis of rotation (R) and has a radially outer housing (3) that encloses a cleaning member (11), and which is mounted in a sprung manner in the axial direction, specifically between a main position (I), in which the cleaning head (1) takes up a predefined main rotational position, and a cleaning position (II), in which the gas nozzle (2) arranged in a rotationally fixed manner is in pressing abutment against the cleaning head (1), which is loaded with a returning force (F_{R}) directed in the direction of the main position (I), in which cleaning position (II) the cleaning head (1) cleans the gas nozzle (2) while rotating, wherein, after cleaning has been completed, the gas nozzle (2) is moved away from the cleaning head (1) and the cleaning head (1) is returned automatically from its cleaning position (II) into its main position (I) in a returning stroke (H) under the action of the returning force (F_{R}), **characterised in that** the cleaning device has a repatriation unit (41) with a slotted guide (43), by means of which the cleaning head (1) is forcibly repatriated into the predefined main rotational position (I) in a rotary movement during the returning stroke (H).

2. Cleaning device according to claim 1, **characterised in that** the cleaning device has at least one optical sensor element (35), with which an operating state of the cleaning member (11) can be detected, and that in particular the optical sensor element (35) is arranged in a rotationally fixed manner and also radially outside the cleaning head (1).

3. Cleaning device according to claim 2, **characterised in that** the cleaning head housing (3) has on the circumferential side at least one sensor opening (39), through which the optical sensor element (35) detects the operating state of the cleaning member (11), and that in particular in the main position (I) and in the predefined main rotational position the housing-side sensor opening (39) with the sensor element (35) is orientated for detection of the operating state of the cleaning member (11), in particular in radial alignment.

4. Cleaning device according to claim 1, 2 or 3, **characterised in that** the slotted guide (43) has at least one run-on slope (47), which during the returning stroke (H) can be brought into sliding or rolling contact with a slotted-link element (49) arranged radially on the outside of the cleaning head housing (3), and that in particular the run-on slope (47) is on a slant with reference to a radial plane at right angles to the axis of rotation (R) and runs as far as a apex point (51) corresponding to the predefined main rotational position.

5. Cleaning device according to claim 4, **characterised in that** during the returning stroke (H) the slotted-link element (49) slides or rolls along the run-on slope (47) as far as the apex point (51) of the slotted guide (43), specifically under forced rotary movement of the cleaning head (1) into the predefined main rotational position.

6. Cleaning device according to claim 4 or 5, **characterised in that** the slotted guide (43) has two slotted arms (45) lying diametrically opposite with reference to the axis of rotation (R), said slotted arms each being configured with a run-on slope (47), and that the two run-on slopes (47) run together to a common apex point (51), and/or that in the cleaning head main position (I) the housing-side slotted-link element (49) is pressed with the returning force (F_{R}) against the apex point (51), and/or that in the cleaning head main position (I) the slotted-link element (49) pressed against the apex point (51) is limited by side walls (53) of the two run-on slopes (47), such that a rotation of the cleaning head is blocked.

7. Cleaning device according to claim 6, **characterised in that** in the cleaning position (II) of the cleaning head (1) the housing-side slotted-link element (49) is out of engagement with the slotted guide (43) and the cleaning head (1) is freely rotatable for a nozzle cleaning, and that for release of the cleaning head rotation the cleaning head (1) is displaceable from its main position (I) into its cleaning position (II).

8. Cleaning device according to any one of the preceding claims, **characterised in that** the cleaning member (11) is a pair of cleaning scissors with two cleaning arms (13, 14), and that the cleaning arms (13, 14) each have in their end regions facing away from the nozzle centrifugal weights, and that the cleaning arms (13, 14) are folded together in the cleaning head main position (I) and, in the folded state, can be retracted into the gas nozzle (2), and that the cleaning arms (13, 14) in the cleaning head-cleaning position (II) are pressed in a sliding and scraping manner on the gas nozzle inside surface (17) of the gas nozzle (2) held in a rotationally fixed manner during a cleaning-head rotation.

9. Cleaning device according to claim 8, **characterised in that**, when the gas nozzle (2) is placed onto a centring stop (35) of the cleaning head (1), while said cleaning head is still in the main position (I), the cleaning arms (13, 14) of the pair of cleaning scissors (11) in the folded state can be retracted into the gas nozzle (2), and/or that at least one of the cleaning arms (13, 14) has a catch (20), which interacts with a radially outer gas nozzle outer contour (25) during retraction, in order to spread out at least partially the cleaning arms (13, 14) in the spreading direction without the action of centrifugal force, specifically in such a way, that a collision-free retraction of the cleaning arms (13, 14) into the gas nozzle (2) is guaranteed.

10. Cleaning device according to claim 9, **characterised in that** the catch (20) forks off radially from the outside of the cleaning arm (13, 14), and that the catch (20) and the cleaning arms (13, 14) take hold of a nozzle wall in the region of the gas nozzle opening (27) on the inside and outside respectively.

## Revendications

1. Dispositif de nettoyage pour un nettoyage mécanique d'une buse de gaz (2) d'un chalumeau de soudage à gaz de protection, avec une tête de nettoyage (1) pouvant être entraînée par moteur, logée en rotation autour d'un axe de rotation (R), qui présente un boîtier radialement extérieur (3), qui entoure un organe de nettoyage (11), et qui est logé de manière élastique dans la direction axiale, et ce entre une position de base (I), dans laquelle la tête de nettoyage (1) adopte une position de rotation de base prédéfinie, et une position de nettoyage (II), dans laquelle la buse de gaz (2) agencée solidaire en rotation est en contact de pression avec la tête de nettoyage (1), qui est sollicitée avec une force de rappel (F_{R}) dirigée en direction de la position de base (I), dans laquelle position de nettoyage (II), la tête de nettoyage (1) nettoie la buse de gaz (2) en rotation, dans lequel une fois le nettoyage effectué, la buse de gaz (2) est retirée de la tête de nettoyage (1) et la tête de nettoyage (1) est ramenée automatiquement de sa position de nettoyage (II) à sa position de base (I) sous l'effet de la force de rappel (F_{R}) dans une course de rappel (H), **caractérisé en ce que** le dispositif de nettoyage présente une unité de retour (41) avec un guidage à coulisse (43), au moyen duquel la tête de nettoyage (1) peut être ramenée par contrainte pendant la course de rappel (H) dans un mouvement de rotation dans la position de rotation de base prédéfinie (I).

2. Dispositif de nettoyage selon la revendication 1, **caractérisé en ce que** le dispositif de nettoyage présente au moins un élément capteur optique (35), avec lequel un état de fonctionnement de l'organe de nettoyage (11) peut être détecté, et qu'en particulier l'élément capteur optique (35) est agencé solidaire en rotation ainsi que radialement à l'extérieur de la tête de nettoyage (1).

3. Dispositif de nettoyage selon la revendication 2, **caractérisé en ce que** le boîtier de tête de nettoyage (3) présente côté circonférentiel au moins une ouverture de capteur (39), par laquelle l'élément capteur optique (35) détecte l'état de fonctionnement de l'organe de nettoyage (11), et qu'en particulier dans la position de base (I) et dans la position de rotation de base prédéfinie, l'ouverture de capteur (39) côté boîtier est orientée avec l'élément capteur (35) pour une détection de l'état de fonctionnement de l'organe de nettoyage (11), en particulier en alignement radial.

4. Dispositif de nettoyage selon la revendication 1, 2 ou 3, **caractérisé en ce que** le guidage à coulisse (43) présente au moins un biseau d'attaque (47), qui peut être amené pendant la course de rappel (H) en contact glissant ou de roulis avec un élément à coulisse (49) agencé radialement à l'extérieur sur le boîtier de tête de nettoyage (3), et qu'en particulier le biseau d'attaque (47) est incliné par rapport à un plan radial en angle droit par rapport à l'axe de rotation (R) et s'étend jusqu'à une position sommitale (51) correspondant à la position de rotation de base prédéfinie.

5. Dispositif de nettoyage selon la revendication 4, **caractérisé en ce que** pendant la course de rappel (H), l'élément à coulisse (49) glisse ou roule le long du biseau d'attaque (47) jusqu'à la position sommitale (51) du guidage à coulisse (43), et ce par mouvement de rotation contraint de la tête de nettoyage (1) dans la position de rotation de base prédéfinie.

6. Dispositif de nettoyage selon la revendication 4 ou 5, **caractérisé en ce que** le guidage à coulisse (43) présente deux bras de coulisse (45) diamétralement opposés par rapport à l'axe de rotation (R), qui sont réalisés respectivement avec un biseau d'attaque (47), et que les deux biseaux d'attaque (47) convergent en une position sommitale (51) commune, et/ou que dans la position de base de tête de nettoyage (I), l'élément à coulisse (49) côté boîtier est poussé avec la force de rappel (F_{R}) contre la position sommitale (51), et/ou que dans la position de base de tête de nettoyage (I), l'élément à coulisse (49) poussé contre la position sommitale (51) est délimité par des flancs latéraux (53) des deux biseaux d'attaque (47), de sorte qu'une rotation de la tête de nettoyage est bloquée.

7. Dispositif de nettoyage selon la revendication 6, **caractérisé en ce que** dans la position de nettoyage (II) de la tête de nettoyage (1), l'élément à coulisse (49) côté boîtier est hors prise avec le guidage à coulisse (43) et la tête de nettoyage (1) est librement rotative pour un nettoyage de buse, et que pour la libération de la rotation de la tête de nettoyage, la tête de nettoyage (1) est réglable de sa position de base (I) à sa position de nettoyage (II).

8. Dispositif de nettoyage selon l'une quelconque des revendications précédentes, **caractérisé en ce que** l'organe de nettoyage (11) est un ciseau de nettoyage avec deux bras de nettoyage (13, 14), et que les bras de nettoyage (13, 14) présentent au niveau de leurs zones d'extrémité opposées à la buse des masselottes, et que les bras de nettoyage (13, 14) sont repliés dans la position de base de tête de nettoyage (I) et peuvent être rentrés à l'état replié dans la buse de gaz (2), et que les bras de nettoyage (13, 14) sont pressés dans la position de nettoyage de tête de nettoyage (II) lors d'une rotation de tête de nettoyage de manière coulissante et par raclage contre la surface intérieure de buse de gaz (17) de la buse de gaz (2) retenue solidaire en rotation.

9. Dispositif de nettoyage selon la revendication 8, **caractérisé en ce que** lors de la pose de la buse de gaz (2) sur une butée de centrage (35) de la tête de nettoyage (1) se trouvant encore dans la position de base (I), les bras de nettoyage (13, 14) du ciseau de nettoyage (11) peuvent être rentrés dans l'état replié dans la buse de gaz (2) et/ou qu'au moins un des bras de nettoyage (13, 14), présente un entraîneur (20), qui coopère lors de la rentrée avec un contour extérieur de buse de gaz radialement extérieur (25) pour écarter au moins en partie les bras de nettoyage (13, 14) sans effet centrifuge dans la direction d'écartement, et ce de sorte qu'une rentrée sans collision des bras de nettoyage (13, 14) dans la buse de gaz (2) est garantie.

10. Dispositif de nettoyage selon la revendication 9, **caractérisé en ce que** l'entraîneur (20) fourche radialement à l'extérieur du bras de nettoyage (13, 14), et que l'entraîneur (20) et les bras de nettoyage (13, 14) entourent une paroi de buse dans la zone de l'ouverture de buse de gaz (27) respectivement côté intérieur et extérieur.
